# EUROPÄISCHE PATENTSCHRIFT

(11) **EP 1 036 101 B1**
(45) Veröffentlichungstag und Bekanntmachung des Hinweises auf die Patenterteilung: **16.08.2001**
(21) Anmeldenummer: 98964413.3
(22) Anmeldetag: 19.11.1998
(51) Int. Cl.: C08F 236/10, C08F 2/20

(54) **VERFAHREN ZUR HERSTELLUNG VON SCHUTZKOLLOIDSTABILISIERTEN VINYLAROMAT-1.3-DIEN-COPOLYMERISATEN**
METHOD FOR PRODUCING PROTECTIVE COLLOID-STABILISED VINYL AROMATIC-1.3-DIENE-COPOLYMERS
PROCEDE POUR LA PRODUCTION DE COPOLYMERES DE VINYLE AROMATIQUE-1,3-DIENE STABILISES PAR COLLOIDE PROTECTEUR

(30) Priorität: 02.12.1997 DE 19753422
(43) Veröffentlichungstag der Anmeldung: 20.09.2000
(73) Patentinhaber: Wacker-Chemie GmbH, 81737 München (DE)
(72) Erfinder: BASTELBERGER, Thomas, D-84547 Emmerting (DE); HAERZSCHEL, Reinhard, D-84489 Burghausen (DE); WEITZEL, Peter, D-84571 Reischach (DE); MAYER, Theo, D-84387 Julbach (DE); BALL, Peter, D-84547 Emmerting (DE)
(74) Vertreter: Schuderer, Michael, Dr.
(86) Internationale Anmeldenummer: EP9807446
(87) Internationale Veröffentlichungsnummer: WO9928360

(56) Entgegenhaltungen:
- EP-A- 0 062 106
- EP-A- 0 408 099

## Beschreibung

Die Erfindung betrifft ein Verfahren zur Herstellung von schutzkolloidstabilisierten Vinylaromat-1.3-Dien-Copolymerisaten.

Schutzkolloidstabilisierte Polymerisate werden vor allem in Form deren wässrigen Dispersionen oder in Wasser redispergierbaren Polymerpulver in vielerlei Anwendungen, beispielsweise als Beschichtungsmittel oder Klebemittel für die unterschiedlichsten Substrate eingesetzt. Polymerisate, welche bei der Herstellung in wässrigem Milieu, beispielsweise mittels Emulsionspolymerisation, durch Emulgatoren stabilisiert werden, neigen aufgrund des Emulgatoranteils bei der Anwendung zu erhöhter Wasseraufnahme und zeigen beispielsweise als Klebemittel eine reduzierte Bindekraft.

Diese Nachteile können durch die alleinige Stabilisierung des Polymerisationsansatzes mittels Schutzkolloiden überwunden werden. Schutzkolloid-stabilisierte wässrige Polymerdispersionen oder Schutzkolloid-stabilisierte Polymerpulver haben sich bisher vor allem auf der Basis von Vinylester-Homopolymerisaten oder -Copolymerisaten, speziell Polyvinylacetat oder Vinylacetat-Ethylen-Copolymerisaten, etabliert. Dies ist darin begründet, daß Schutzkolloide im Vergleich zu Emulgatoren im allgemeinen eine geringere stabilisierende Wirkung entfalten und somit bislang nur mit relativ hydrophilen Polymerisaten, wie den oben erwähnten Vinylester-Polymerisaten der vollständige Ersatz von Emulgatoren durch Schutzkolloide zu befriedigenden Produkten geführt hat.

In vielen Anwendungen werden allerdings Polymere mit ausgesprochen hydrophobem Charakter bevorzugt; ein Beispiel hierfür sind Styrol-Butadien-Copolymerisate. Solche Polymerisate erfordern allerdings bei der Polymerisation eine wirksame Stabilisierung. Im allgemeinen werden Styrol-Butadien-Copolymerisate deshalb in Gegenwart von Emulgatoren in wässriger Phase polymerisiert. Aufgrund des hydrophilen Charakters der Emulgatoren werden allerdings in der Anwendung von emulgatorstabilisierten Styrol-Butadien-Copolymerisaten die hydrophoben Eigenschaften des Copolymerisats aufgrund des Emulgatoranteils teilkompensiert.

Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Zementstabilität); denn es ist einem Anwender nicht zuzumuten, daß er innerhalb einer kurzen Zeitspanne eine neue Mischung anrühren muß. In der Beton- und Mörtelindustrie spielen darüberhinaus die mechanischen Eigenschaften, wie die Druckfestigkeit, die Porosität und damit der Luftporengehalt eine wesentliche Rolle. Sind zu viele Luftporen vorhanden, so sinkt die Druckfestigkeit stark ab, sind zu wenig oder keine Luftporen im Mörtel oder Beton vorhanden, ist der Baustoff nicht genügend frosttaustabil. Die mit dem Dispersionspulver vergüteten hydraulisch abbindenden Systeme sollen zudem noch bessere Haftung gegenüber den unvergüteten Systemen erbringen.

Aus der WO-A 96/17891 sind in Wasser redispergierbare Dispersionspulver auf der Basis von Styrol-Butadien-Copolymerisaten bekannt. Die Pulver werden durch Emulsionspolymerisation in Gegenwart von Emulgatoren zugänglich. Vor der Trocknung werden der Dispersion noch Monosaccharid, Polyvinylpyrrolidon und gegebenenfalls Emulgator zugegeben. Aus der WO-A 96/20963 ist ein Verfahren zur Herstellung von in Wasser redispergierbaren Polymerpulvern auf der Basis von Styrol/Butadien-Polymerisaten bekannt, wobei die Polymerisate in einer Zweistufen-Polymerisation in Gegenwart von Emulgator unter Erhalt von Kern-Schale-Polymerisaten hergestellt werden und durch Sprühtrocknung getrocknet werden. Die WO-A 96/41825 betrifft ebenfalls Dispersionspulver auf der Basis von Kern-Schale-Polymerisaten, wobei die Schale Saccharid-funktionelle Comonomere und vernetzbare Comonomere, zur kovalenten Anbindung der Schale an den Kern, aufweist. Neben der relativ aufwendigen Verfahrensweise zur Herstellung der Redispersionspulver weisen diese Pulver die oben diskutierten Nachteile emulgatorstabilisierter Styrol-Butadien-Copolymerisate auf, darüberhinaus können die anwendungstechnischen Eigenschaften, speziell die Verarbeitbarkeit im Hinblick auf die Zementstabilität nicht zufriedenstellen.

Die WO-A 97/15603 betrifft schutzkolloidstabilierte Emulsionspolymerisate von konjugierten Dienen, wobei zur Verbesserung der Schutzkolloidwirkung Mercaptosilane copolymerisiert werden. Nachteilig ist hierbei, daß neben dem Schutzkolloid auch noch Emulgator zur Polymerisation eingesetzt wird, und vor allem die zwingend notwendige Copolymerisation von Mercaptosilan, welche für viele Anwendung, aufgrund der damit bedingten Herabsetzung des Vernetzungsgrades der Butadieneinheiten, nicht erwünscht ist und die Herstellung verteuert.

Die EP-A 538571 betrifft ein Verfahren zur Herstellung von mit Schutzkolloiden stabilisierten Polymerdispersionen auf der Basis von Polymerisaten mit mehr als 50 % Styrol- und/oder (Meth)acrylsäureester-Anteil, wobei der zur Stabilisierung eingesetzte Polyvinylalkohol insgesamt vorgelegt wird und zur Einstellung von Hydrophilie und Viskosität mit speziellen Initiatorsystemen gearbeitet wird. In den Beispielen werden mit Styrol, Butylacrylat und Acrylamid stabile Dispersionen erhalten. Nachteilig ist, daß bei der Copolymerisation von Styrol und Butadien mit diesem Verfahren keine stabilen Dispersionen erhalten werden.

Aus der EP-B 62106 ist bekannt, zur Herstellung von polyvinylalkoholstabilisierten Polymerdispersionen auf der Basis von Styrol- und/oder (Meth)acrylsäureester-Einheiten so vorzugehen, daß bei einer Mindesttemperatur von über 65°C, in Gegenwart von organischen Initiatoren oder Peroxoschwefelverbindungen und unter Dosierung der Hauptmenge der Monomeren gearbeitet wird. Die Herstellung von Styrol-Butadien-Copolymerisaten wird nicht behandelt.

Die US-A 5200459 beschreibt ein Verfahren zur Herstellung von polyvinylalkoholstabilisierten Butadienmischpolymerisaten, wobei zur Sicherstellung der Dispersionsstabilität in Gegenwart eines mit Wasser mischbaren Lösungsmittels gearbeitet wird.

Die DE-A 4212768 betrifft ein Verfahren zur Herstellung von Kunststoffdispersionen, unter anderem Styrol-Butadien-Copolymerdispersionen, welche ohne Zusatz von Emulgator, statt dessen in Gegenwart eines copolymerisierbaren Makromonomers auf der Basis von Vernetzungsprodukten von Polyalkylenglykolen und Maleinsäure oder Fumarsäure hergestellt werden.

In der US-A 4299903 wird gelehrt, ein emulgatorfreies Tonerharz auf Basis von Styrol-Butadien durch Copolymerisation in Gegenwart eines "charge control agent" aus der Gruppe der quarternären Ammoniumsalze oder Alkylpyridiniumverbindungen herzustellen.

Der Erfindung lag somit die Aufgabe zugrunde, ein Verfahren zur Verfügung zu stellen mit dem schutzkolloidstabilisierte Vinylaromat-1.3-Dien-Copolymerisate ohne Zusatz von weiteren Hilfsmitteln zur Stabilisierung des Polymerisationsansatzes zugänglich werden, wobei die Verfahrensprodukte insbesondere bei der Anwendung mit hydraulischen Bindemitteln über eine voll befriedigende Zementstabilität verfügen sollten.

Gegenstand der Erfindung ist ein Verfahren zur Herstellung von schutzkolloidstabilisierten Vinylaromat-1.3-Dien-Copolymerisaten in Form deren wässrigen Polymerdispersionen oder in Wasser redispergierbaren Pulver durch Emulsionspolymerisation eines Gemisches enthaltend mindestens einen Vinylaromaten und mindestens ein 1.3-Dien in Gegenwart von Schutzkolloid und gegebenfalls Trocknung der damit erhaltenen Polymerdispersionen, dadurch gekennzeichnet, daß das Schutzkolloid teilweise vorgelegt und teilweise dosiert wird.

Geeignete Vinylaromaten sind Styrol und Methylstyrol, vorzugsweise wird Styrol eingesetzt. Beispiele für 1.3-Diene sind 1.3-Butadien und Isopren, bevorzugt wird 1.3-Butadien. Zur Polymerisation werden im allgemeinen Gemische mit 20 bis 80 Gew% Vinylaromat und 20 bis 80 Gew% 1.3-Dien eingesetzt, wobei die Gemische gegebenenfalls noch weitere Monomere enthalten können, und sich die Angaben in Gewichtsprozent jeweils auf 100 Gew% aufaddieren.

Gegebenenfalls können noch bis zu 30 Gew%, bezogen auf das Gesamtgewicht der Monomerphase, weitere mit Vinylaromaten und 1.3-Dienen copolymerisierbare Monomere wie Ethylen, Vinylchlorid, (Meth)acrylsäureester von Alkoholen mit 1 bis 15 C-Atomen oder Vinylester von unverzweigten oder verzweigten Carbonsäuren copolymerisiert werden.

Gegebenenfalls können noch 0.05 bis 10 Gew%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, ausgenommen Mercaptosilane, wie Acryloxypropyltri (alkoxy) - und Methacryloxypropyl-tri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von -50°C bis +50°C, vorzugsweise -20°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Die Herstellung der schutzkolloidstabilisierten Polymere erfolgt nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen oder Vinylchlorid kann auch unter Druck, im allgemeinen zwischen 5 bar und 100 bar, gearbeitet werden.

Die Initiierung der Polymerisation erfolgt mit den für die Emulsionspolymerisation gebräuchlichen Initiatoren oder Redox-Initiator-Kombinationen. Geeignete organische Initiatoren sind beispielsweise Hydroperoxide wie tert.-Butylhydroperoxid, tert.-Butylperoxopivalat, Cumolhydroperoxid, Isopropylbenzolmonohydroperoxid oder Azoverbindungen wie Azobisisobutyronitril. Geeignete anorganische Initiatoren sind die Natrium-, Kalium- und Ammoniumsalze der Peroxodischwefelsäure. Die genannten Initiatoren werden im allgemeinen in einer Menge von 0.05 bis 3 Gew%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 5.0 Gew%, bezogen auf das Gesamtgewicht der Monomere.

Zur Steuerung des Molekulargewichts können während der Polymerisation regelnde Substanzen eingesetzt werden. Sie werden üblicherweise in Mengen zwischen 0.01 bis 5.0 Gew%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Die Stabilisierung des Polymerisationsansatzes erfolgt mittels Schutzkolloiden, wobei ohne Zusatz von Emulgatoren gearbeitet wird. Geeignete Schutzkolloide, sind vollverseifte und teilverseifte Polyvinylacetate. Geeignet sind auch teilverseifte, hydrophobierte Polyvinylacetate, wobei die Hydrophobierung beispielsweise durch Copolymerisation mit Isopropenylacetat, Ethylen oder Vinylestern von gesättigten alpha-verzweigten Monocarbonsäuren mit 5 bis 11 C-Atomen erfolgen kann. Weitere Beispiele sind Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere, Dextrine wie Gelbdextrin.

Bevorzugt werden die genannten teilverseiften Polyvinylacetate und teilverseiften, hydrophobierten Polyvinylacetate.. Besonders bevorzugt werden teilverseifte Polyvinylacetate mit einem Hydrolysegrad von 80 bis 95 Mol%, und einer Höpplerviskosität (4 %-ige wässrige Lösung, DIN 53015, Methode nach Höppler bei 20°C) von 1 bis 30 mPas, vorzugsweise 2 bis 15 mPas.

Die Schutzkolloide werden im allgemeinen in einer Menge von insgesamt 1 bis 15 Gew%, bezogen auf das Gesamtgewicht der Monomere, bei der Polymerisation zugesetzt. Der Schutzkolloid-Anteil wird dabei teilweise vorgelegt und teilweise nach Initiierung der Polymerisation zudosiert, das heisst, es werden 2 bis 90 Gew%, vorzugsweise 30 bis 85 Gew%, des Schutzkolloidanteils vorgelegt, jeweils bezogen auf das Gesamtgewicht des Schutzkolloidanteils, und der Rest zudosiert. Wesentlich dafür, zu welchem Gewichtsanteil das Schutzkolloid vorgelegt wird, ist dabei der Monomeranteil in der Vorlage. Die Vorlage und die Dosierung des Schutzkolloids werden daher so gesteuert, daß das Verhältnis des Schutzkolloids bezogen auf den Monomeranteil in der Vorlage 0.1 : 1 bis 0.9 : 1 beträgt. Während der Polymerisation werden dann Monomer und Schutzkolloid derart dosiert, daß das Schutzkolloid nach Polymerisationsende in einer Menge von insgesamt 1 bis 15 Gew%, bezogen auf das Gesamtgewicht der Monomere, vorliegt.

Die Monomere können insgesamt vorgelegt werden, insgesamt zudosiert werden oder in Anteilen vorgelegt werden und der Rest nach der Initiierung der Polymerisation zudosiert werden. Vorzugsweise wird so vorgegangen, daß 10 bis 25 Gew%, bezogen auf das Gesamtgewicht der Monomere vorgelegt werden und der Rest zudosiert wird. Die Dosierungen können separat (räumlich und zeitlich) durchgeführt werden. Die zu dosierenden Komponenten können alle oder teilweise voremulgiert dosiert werden. Zur Initiierung der Polymerisation kann der thermische Initiator insgesamt vorgelegt werden, oder teilweise vorgelegt und teilweise dosiert werden, oder nur dosiert werden.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew%, vorzugsweise von 40 bis 65 Gew%. Zur Herstellung der in Wasser redispergierbaren Polymerpulvern werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Die Gesamtmenge an Schutzkolloid vor dem Trocknungsvorgang soll vorzugsweise mindestens 10 Gew%, bezogen auf den Polymeranteil betragen. Zur Gewährleistung der Redispergierbarkeit ist es in der Regel erforderlich der Dispersion vor der Trocknung weitere Schutzkolloide als Verdüsungshilfe zuzugeben. In der Regel wird die Verdüsungshilfe in einer Menge von 5 bis 25 Gew%, bezogen auf die polymeren Bestandteile der Dispersion, eingesetzt.

Geeignete Verdüsungshilfen sind teilverseifte Polyvinylacetate; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden als Verdüsungshilfe teilverseifte Polyvinylacetate mit einem Hydrolysegrad von 80 bis 95 Mol%, einer Höppler-Viskosität von 1 bis 30 mPas, welche gegebenenfalls mit Isopropenylacetat- oder Vinylestereinheiten modifiziert sein können.

Bei der Verdüsung hat sich vielfach ein Gehalt von bis zu 1.5 Gew% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew%, bezogen auf das Gesamtgewicht polymerer Bestandteile, versetzt werden. Beispiele für Antiblockmittel sind Cabzw. Mg-Carbonat, Talk, Gips, Kieselsäure, Silicate mit Teilchengrößen vorzugsweise im Bereich von 10 nm bis 10 *µ*m.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die in Wasser redispergierbaren, schutzkolloidstabilisierten Polymerpulver können in den dafür typischen Anwendungsbereichen eingesetzt werden.

Die nachfolgenden Beispiele dienen der weiteren Erläuterung der Erfindung:

### Beispiel 1:

In einem Rührautoklaven mit ca. 5 1 Inhalt wurden 1110 ml entionisiertes Wasser, 655 g einer 20 Gew%-igen wässrigen Lösung eines teilverseiften Polyvinylacetats mit einem Hydrolysegrad von 88 Mol%, einer Höpplerviskosität der 4 %-igen Lösung von 4. mPas (DIN 53015, Methode nach Höppler bei 20°C), vorgelegt. Der pH-Wert wurde mit 10 Gew%-iger Ameisensäure auf 4.0 bis 4.2 eingestellt. Anschließend wurde evakuiert, mit Stickstoff gespült, erneut evakuiert und ein Gemisch aus 112 g Styrol, 168 g 1.3-Butadien und 8 g tert.-Dodecylmercaptan eingesaugt. Nach Aufheizen auf 80°C wurde die Polymerisation durch gleichzeitiges Einfahren von zwei Katalysatorlösungen gestartet, von denen die erste aus 110 g entionisiertem Wasser und 15.5 g einer 40 %-igen wässrigen tert.-Butylhydroperoxidlösung und die andere aus 116 g entionisiertem Wasser und 13 g Natriumformaldehydsulfoxylat bestand, wobei die Dosierung der beiden Katalysatorlösungen mit gleicher Zulaufgeschwindigkeit (18 ml/h) erfolgte. Nach Polymerisationsbeginn wurde mit der dosierten Zugabe eines Gemischs von 951 g 1.3-Butadien, 634 g Styrol und 9 g tert.-Dodecylmercaptan mit einer Rate von 5.3 g/min begonnen. Gleichzeitig wurden 245 g einer 20 Gew%-igen wässrigen Lösung eines teilverseiften Polyvinylacetats mit einem Hydrolysegrad von 88 Mol%, einer Höpplerviskosität der 4 %-igen Lösung von 4 mPas (DIN 53015, Methode nach Höppler bei 20°C), mit einer Rate von 0.82 g/min, zudosiert. Nach Ende des Monomer- und Polyvinylalkoholzulaufs wurde noch 2 h bei 80°C mit unveränderter Zulaufgeschwindigkeit der Initiatorlösung nachpolymerisiert, anschließend wurde der Zulauf der Initiatorlösungen beendet und abgekühlt.
Man erhielt eine stabile, grobteilige (Coulter LS 230; Dw = 2.54 *µ*m) und koagulatfreie Dispersion, die bei einem Festkörpergehalt von 49.4 % eine Viskosität (Brookfield-Viskosimeter, 20°C, 20 Upm) von 270 mPas aufwies.
400 Gew-Teile der Dispersion wurden mit 200 Gew-Teilen einer 10.3 Gew%-igen Lösung eines Polyvinylalkohols (teilverseiftes Polyvinylacetat, Hydrolysegrad 88 Mol%, Viskosität der 4 %-igen Lösung 13 mPas), 0.84 Gew-Teilen Entschäumer und 135 Gew-Teilen Wasser versetzt und gründlich gemischt. Die Dispersion wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet.
Das erhaltene trockene Pulver wurde mit 10 % handelsüblichem Antiblockmittel (Gemisch aus Calcium-Magnesium-Carbonat und Magnesiumhydrosilikat) versetzt.

### Beispiel 2:

Die Herstellung der Dispersion erfolgte analog Beispiel 1, unter Einsatz von insgesamt 900 g einer 20 Gew%-igen wässrigen Lösung eines teilverseiften Polyvinylacetats mit einem Hydrolysegrad von 88 Mol%, einer Höpplerviskosität der 4 %-igen Lösung von 4 mPas, wovon 468 g der wässrigen Polyvinylalkohollösung im Druckreaktor vorgelegt und die restlichen 432 g wie in Beispiel 1 beschrieben während der Polymerisation zudosiert wurden. Man erhielt eine stabile, grobteilige (Coulter LS 230; Dw = 2.73 *µ*m) und koagulatfreie Dispersion, die bei einem Festkörpergehalt von 49.9 % eine Viskosität (Brookfield-Viskosimeter, 20°C, 20 Upm) von 260 mPas aufwies.
Die Maßnahmen zur Herstellung des Dispersionspulvers entsprachen Beispiel 1.

### Beispiel 3:

Die Herstellung der Dispersion erfolgte analog Beispiel 1, unter Einsatz von insgesamt 900 g einer 20 Gew%-igen wässrigen Lösung eines teilverseiften Polyvinylacetats mit einem Hydrolysegrad von 88 Mol%, einer Höpplerviskosität der 4 %-igen Lösung von 4 mPas, wovon 281 g der wässrigen Polyvinylalkohollösung im Druckreaktor vorgelegt und die restlichen 619 g wie in Beispiel 1 beschrieben während der Polymerisation zudosiert wurden. Man erhielt eine stabile, grobteilige (Coulter LS 230; Dw = 2.63 *µ*m) und koagulatfreie Dispersion, die bei einem Festkörpergehalt von 49.8 % eine Viskosität (Brookfield-Viskosimeter, 20°C, 20 Upm) von 18400 mPas aufwies.
Alle anderen Maßnahmen entsprachen Beispiel 1.

### Beispiel 4:

Die Herstellung der Dispersion erfolgte analog Beispiel 1, unter Einsatz von insgesamt 900 g einer 20 Gew%-igen wässrigen Lösung eines teilverseiften Polyvinylacetats mit einem Hydrolysegrad von 88 Mol%, einer Höpplerviskosität der 4 %-igen Lösung von 4 mPas, wovon 720 g der wässrigen Polyvinylalkohollösung im Druckreaktor vorgelegt und die restlichen 180 g wie in Beispiel 1 beschrieben während der Polymerisation zudosiert wurden. Man erhielt eine stabile, grobteilige (Coulter LS 230; Dw = 2.60 *µ*m) und koagulatfreie Dispersion, die bei einem Festkörpergehalt von 49.0 % eine Viskosität (Brookfield-Viskosimeter, 20°C, 20 Upm) von 300 mPas aufwies.
Alle anderen Maßnahmen entsprachen Beispiel 1.

### Beispiel 5:

Die Herstellung der Dispersion erfolgte analog Beispiel 1, unter Einsatz von insgesamt 1000 g einer 20 Gew%-igen wässrigen Lösung eines Gelbdextrins (Avedex 35), wovon 500 g im Druckreaktor vorgelegt und die restlichen 500 g wie in Beispiel 1 beschrieben während der Polymerisation zudosiert wurden. Man erhielt eine stabile, grobteilige (Coulter LS 230; Dw = 2.80 *µ*m) und koagulatfreie Dispersion, die bei einem Festkörpergehalt von 49.8 % eine Viskosität (Brookfield-Viskosimeter, 20°C, 20 Upm) von 310 mPas aufwies.
Alle anderen Maßnahmen entsprachen Beispiel 1.

### Beispiel 6:

Die Herstellung der Dispersion erfolgte analog Beispiel 1, wobei 37 g Acrylsäure vorgelegt wurden und unter Einsatz von insgesamt 1000 g einer 20 Gew%-igen wässrigen Lösung von Hydroxypropyl-Cellulose (Klucel L), wovon 500 g im Druckreaktor vorgelegt und die restlichen 500 g wie in Beispiel 1 beschrieben während der Polymerisation zudosiert wurden. Man erhielt eine stabile, grobteilige (Coulter LS 230; Dw = 2.74 *µ*m) und koagulatfreie Dispersion, die bei einem Festkörpergehalt von 48.0 % eine Viskosität (Brookfield-Viskosimeter, 20°C, 20 Upm) von 420 mPas aufwies.
Alle anderen Maßnahmen entsprachen Beispiel 1.

### Beispiel 7:

Die Herstellung der Dispersion erfolgte analog Beispiel 1, wobei 37 g Acrylsäure vorgelegt wurden und unter Einsatz von insgesamt 1000 g einer 20 Gew%-igen wässrigen Stärke-Lösung (Nylgum), wovon 500 g im Druckreaktor vorgelegt und die restlichen 500 g wie in Beispiel 1 beschrieben während der Polymerisation zudosiert wurden. Man erhielt eine stabile, grobteilige (Coulter LS 230; Dw = 2.86 *µ*m) und koagulatfreie Dispersion, die bei einem Festkörpergehalt von 48.4 % eine Viskosität (Brookfield-Viskosimeter, 20°C, 20 Upm) von 500 mPas aufwies.
Alle anderen Maßnahmen entsprachen Beispiel 1.

### Vergleichsbeispiel 1:

Die Herstellung der Dispersion erfolgte analog Beispiel 1 wobei die Gesamtmenge von 900 g der 20 Gew%-igen wässrigen Lösung des teilverseiften Polyvinylacetats mit einem Hydrolysegrad von 88 Mol%, einer Höpplerviskosität der 4 %-igen Lösung von 4 mPas, im Druckreaktor vorgelegt wurde. Alle anderen Maßnahmen entsprachen Beispiel 1.
Man erhielt eine stabile, grobteilige (Coulter LS 230; Dw = 2.57 *µ*m) und koagulatfreie Dispersion, die bei einem Festkörpergehalt von 49.3 % eine Viskosität (Brookfield-Viskosimeter, 20°C, 20 Upm) von 275 mPas aufwies.
Die Herstellung des Dispersionspulvers war analog Beispiel 1.

### Vergleichsbeispiel 2:

Die Herstellung der Dispersion erfolgte analog Beispiel 1 wobei die Gesamtmenge von 900 g der 20 Gew%-igen wässrigen Lösung des teilverseiften Polyvinylacetats mit einem Hydrolysegrad von 88 Mol%, einer Höpplerviskosität der 4 %-igen Lösung von 4 mPas, in den Druckreaktor zudosiert wurde. Alle anderen Maßnahmen entsprachen Beispiel 1.

Man erhielt eine nicht vollständig auspolymerisierte, sehr grobteilige (Coulter LS 230; Dw = 4.37 *µ*m) und koagulatreiche Dispersion, die bei einem Festkörpergehalt von 32.1 % eine Viskosität (Brookfield-Viskosimeter, 20°C, 20 Upm) von 75 mPas aufwies.
Die Herstellung des Dispersionspulvers war analog Beispiel 1.

### Vergleichsbeispiel 3:

Die Herstellung der Dispersion erfolgte analog Beispiel 1, wobei die Gesamtmenge (900 g) der 20 Gew.%igen wässrigen Lösung des teilverseiften Polyvinylacetats mit einem Hydrolysegrad von 88 Mol% und einer Höpplerviskosität der 4%igen Lösung von 4 mPas, sowie die gesamte Styrol-, 1.3-Butadien- und tert-Dodecylmercaptanmenge in den Druckreaktor zudosiert wurde. Alle anderen Maßnahmen entsprachen Beispiel 1.
Man erhielt eine nicht vollständig auspolymerisierte, grobteilige (Coulter LS 230; Dw = 3.72 µm) und koagulatreiche Dispersion, die bie einem Festkörpergehalt von 26.1% eine Viskosität (Brookfield-Viskosimeter, 20°C, 20 Upm) von 63 mPas aufwies.

### Redispergierverhalten der Polymerfilme:

Aus den Dispersionen der genannten Beispielen wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pipette jeweils ein Wassertropfen auf eine homogene Stelle des zu prüfenden Filmes aufgebracht, und nach 60 Sekunden Einwirkzeit der Wassertropfen mit der Fingerkuppe so lange an der gleichen Stelle verrieben, bis die Glasplatte an dieser Stelle filmfrei war, der Film in Filmstücke zerfiel oder vollständig erhalten blieb.

Die Redispergierbarkeit der Polymerfilme wurde mit folgendem Bewertungsschema beurteilt:
- Note 1:: Film läßt sich durch leichtes Reiben sofort redispergieren oder redispergiert bereits selbständig;
- Note 2:: Film läßt sich durch Reiben redispergieren, wenig redispergierbare Filmstücke möglich;
- Note 3:: Film läßt sich nur durch kräftiges Reiben unter Bildung von Filmstücken redispergieren;
- Note 4:: Film läßt sich auch durch längeres kräftiges Reiben nicht redispergieren, sondern zerfällt in Filmstücke.

### Bestimmung des Absitzverhaltens der Pulver (Röhrenabsitz):

Zur Bestimmung des Absitzverhaltens wurden jeweils 50 g des Dispersionspulvers in 50 ml Wasser redispergiert, danach auf 0.5 % Festgehalt verdünnt, in eine graduierte Röhre gefüllt. Anschließend wurde die Absitzhöhe an Feststoff von 100 ml dieser Redispersion nach 1 Stunde gemessen.

### Bestimmung der Blockfestigkeit:

Zur Bestimmung der Blockfestigkeit wurde das Dispersionspulver in ein Eisenrohr (Durchmesser: 5 cm) mit Verschraubung gefüllt und danach mit einem Metallstempel (Gewicht: 3 kg) belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung des Luftgehalts im Mörtel:

Es wurde ein DIN-Mörtel nach DIN 1164 der nachfolgenden Rezeptur mit einem Wasser-Zement-Faktor W/Z von 0.45 und einem Kunststoff-Zement-Faktor K/Z von 0.15 angerührt:

| | |
|---|---|
| Portlandzement PZ-35F | 900 g |
| Normsand | 2700 g |
| Silicon-Entschäumer S-860 (Fa. Wacker Chemie) | 7.2 g |
| Dispersionspulver | 135 g |
| Wasser | 405 g |

Der Luftgehalt wurde mittels DIN 18555 Teil 2 bestimmt.

### Bestimmung der Zementstabilität:

Es wurde eine Zementmischung der nachfolgenden Rezeptur angerührt:

| | |
|---|---|
| Portlandzement | 82.5 g |
| Calcit (CaCO)₃ 10-40 mm | 75 g |
| Quarzsand 200-500 mm | 128 g |
| Dispersionspulver | 15 g |
| Wasser | 85 g |

Die Verarbeitbarkeit der Zementmischung wurde über einen Zeitraum von 2 Stunden beobachtet und qualitativ beurteilt.

Die Prüfergebnisse sind in Tabelle 1 zusammengefaßt.

**Tabelle 1:**

| Beispiel | Filmredisper⁻ gierbarkeit | Röhrenabsitz 1 h [cm] | Blockfestigkeit | Luftgehalt im Mörtel | Zementstabilität |
|---|---|---|---|---|---|
| Bsp. 1 | Note 1 | 0.1 | 2 | 6 % | 2 h |
| Bsp. 2 | Note 1 | 0.1 | 2 | 4 % | 2 h |
| Bsp. 3 | Note 4 | 0.2 | 2 | 5 % | 2 h |
| Bsp. 4 | Note 2 | 0.3 | 2 | 5 % | 1.5 h |
| Bsp. 5 | Note 1 | 0.2 | 2 | 7 % | 2 h |
| Bsp. 6 | Note 1 | 0.1 | 2 | 6 % | 2 h |
| Bsp. 7 | Note 2 | 0.3 | 2 | 5 % | 2 h |
| V.bsp. 1 | Note 4 | 0.4 | 2 | 4 % | 15 Minuten |
| V.bsp. 2 | Note 4 | 1.1 | 3 | --- | 15 Minuten |
| V.bsp. 3 | Note 4 | 3.1 | 3 | --- | 15 Minuten |

Mit der erfindungsgemäßen Verfahrensweise werden auch auf der Basis von Copolymerisaten von hydrophoben Comonomeren wie Styrol und Butadien Dispersionspulver zugänglich, welche sich durch sehr gute Redispergierbarkeit (Röhrenabsitz) und sehr gute anwendungstechnische Eigenschaften (Zementstabilität) auszeichnen. Wird bei der Emulsionspolymerisation der gesamte Schutzkolloid-Anteil vorgelegt oder vollständig zudosiert, sind sowohl die Redispergierbarkeit als auch die anwendungstechnischen Eigenschaften der damit erhältlichen Pulver unbefriedigend.

## Patentansprüche

1. Verfahren zur Herstellung von schutzkolloidstabilisierten Vinylaromat-1.3-Dien-Copolymerisaten in Form deren wässrigen Polymerdispersionen oder in Wasser redispergierbaren Pulver durch Emulsionspolymerisation eines Gemisches enthaltend mindestens einen Vinylaromaten und mindestens ein 1.3-Dien in Gegenwart von Schutzkolloid und gegebenfalls Trocknung der damit erhaltenen Polymerdispersionen, dadurch gekennzeichnet, daß 2 bis 90 Gew% des Schutzkolloid-Anteils vorgelegt werden und der Rest zudosiert wird.

2. Verfahren nach Anspruch 1, dadurch gekennzeichnet, daß Gemische mit 20 bis 80 Gew% Vinylaromat und 20 bis 80 Gew% 1.3-Dien eingesetzt werden, wobei die Gemische gegebenenfalls noch weitere Monomere enthalten können und sich die Angaben in Gewichtsprozent jeweils auf 100 Gew% aufaddieren.

3. Verfahren nach Anspruch 2, dadurch gekennzeichnet, daß Styrol und 1.3-Butadien copolymerisiert werden.

4. Verfahren nach Anspruch 1 bis 3, dadurch gekennzeichnet, daß als Schutzkolloid ein oder mehrere aus der Gruppe umfassend vollverseifte und teilverseifte Polyvinylacetate, teilverseifte, hydrophobierte Polyvinylacetate, Polyvinylpyrrolidone, Stärken, Cellulosen, Carboxymethyl-, Methyl-, Hydroxyethyl-, Hydroxypropyl-Cellulose, Proteine, Poly(meth)acrylsäure, Poly(meth)acrylamid, Polyvinylsulfonsäuren, Melaminformaldehydsulfonate, Naphthalinformaldehydsulfonate, Styrolmaleinsäure- und Vinylethermaleinsäure-Copolymere, Dextrine eingesetzt werden.

5. Verfahren nach Anspruch 4, dadurch gekennzeichnet, daß in Gegenwart von teilverseiftem Polyvinylacetat mit einem Hydrolysegrad von 80 bis 95 Mol% und einer Höpplerviskosität von 1 bis 30 mPas, polymerisiert wird.

6. Verfahren nach Anspruch 1 bis 5, dadurch gekennzeichnet, daß noch 0.05 bis 10 Gew%, bezogen auf das Gesamtgewicht des Monomergemisches, Hilfsmonomere copolymerisiert werden aus der Gruppe umfassend ethylenisch ungesättigte Mono- und Dicarbonsäuren, ethylenisch ungesättigte Carbonsäureamide und -nitrile, Mono- und Diester der Fumarsäure und Maleinsäure, ethylenisch ungesättigte Sulfonsäuren bzw. deren Salze, vorvernetzende, mehrfach ethylenisch ungesättigte Comonomere, nachvernetzende Comonomere, epoxidfunktionelle Comonomere, siliciumfunktionelle Comonomere, Comonomere mit Hydroxy- oder CO-Gruppen.

7. Verfahren nach Anspruch 1 bis 6, dadurch gekennzeichnet, daß die Trocknung der Polymerdispersion mittels Sprühtrocknung, gegebenenfalls nach Zugabe weiterer Schutzkolloide erfolgt.

## Claims

1. Process for preparing protective-colloid-stabilized vinylaromatic-1,3-diene copolymers in the form of their aqueous polymer dispersions or in the form of their water-redispersible powders, by emulsion polymerization of a mixture comprising at least one vinylaromatic and comprising at least 1,3-diene in the presence of protective colloid and, if desired, drying the resultant polymer dispersions, characterized in that from 2 to 90% by weight of the protective colloid content is used as an initial charge and the remainder is fed.

2. Process according to Claim 1, characterized in that use is made of mixtures with from 20 to 80% by weight of vinylaromatic and from 20 to 80% by weight of 1,3-diene, where the mixtures may, if desired, also comprise other monomers and the per cent by weight data always give a total of 100% by weight.

3. Process according to Claim 2, characterized in that styrene and 1,3-butadiene are copolymerized.

4. Process according to any of Claims 1 to 3, characterized in that the protective colloid used comprises one or more selected from the group which includes fully and partially hydrolysed polyvinyl acetates, partially hydrolysed hydrophobicized polyvinyl acetates, polyvinylpyrrolidones, starches, celluloses, carboxymethyl-, methyl-, hydroxyethyl- and hydroxypropylcellulose, proteins, poly(meth)acrylic acid, poly(meth)acrylamide, polyvinylsulphonic acids, melamine-formaldehydesulphonates, naphthalene formaldehydesulphonates, styrene-maleic acid copolymers and vinyl ether-maleic acid copolymers, and dextrins.

5. Process according to Claim 4, characterized in that the polymerization is carried out in the presence of partially hydrolysed polyvinyl acetate with a degree of hydrolysis of from 80 to 95 mol% and with a Höppler viscosity of from 1 to 30 mPas.

6. Process according to any of Claims 1 to 5, characterized in that from 0.05 to 10% by weight, based on the total weight of the monomer mixture, of auxiliary monomers selected from the group which includes ethylenically unsaturated mono- and dicarboxylic acids, ethylenically unsaturated carboxamides, ethylenically unsaturated carbonitriles, mono- and diesters of fumaric acid or of maleic acid, ethylenically unsaturated sulphonic acids and salts of these, precrosslinked comonomers having two or more ethylenic unsaturated bonds, postcrosslinking comonomers, epoxy-functional comonomers, silicon-functional comonomers and comonomers having hydroxyl or CO groups are also copolymerized.

7. Process according to any of Claims 1 to 6, characterized in that the polymer dispersion is dried by spray drying, if desired after adding further protective colloids.

## Revendications

1. Procédé pour la préparation de copolymères d'aromate de vinyle et de 1,3-diène stabilisés par des colloïdes de protection sous forme de leurs dispersions aqueuses de polymère ou de poudres redispersibles dans de l'eau par polymérisation en émulsion d'un mélange contenant au moins un aromate de vinyle et au moins un 1,3-diène en présence de colloïde de protection et le cas échéant par séchage des dispersions de polymère ainsi obtenues, caractérisé en ce que 2 à 90% en poids de la proportion de colloïde de protection est disposé au préalable et que le reste est ajouté par dosage.

2. Procédé selon la revendication 1, caractérisé en ce qu'on utilise des mélanges comprenant 20 à 80% en poids d'aromate de vinyle et 20 à 80% en poids de 1,3-diène, les mélanges pouvant le cas échéant encore contenir d'autres monomères et les indications en pourcent en poids s'ajoutant à chaque fois pour former 100% en poids.

3. Procédé selon la revendication 2, caractérisé en ce que du styrène et du 1,3-butadiène sont copolymérisés.

4. Procédé selon les revendications 1 à 3, caractérisé en ce qu'on utilise comme colloide de protection un ou plusieurs du groupe comprenant des poly(acétates de vinyle) complètement ou partiellement saponifiés, des poly(acétates de vinyle) partiellement saponifiés, rendus hydrophobes, des polyvinylpyrrolidones, des amidons, des celluloses, des carboxyméthylcelluloses, des méthylcelluloses, des hydroxyéthylcelluloses, des hydroxypropylcelluloses, des protéines, des poly(acides (méth)acryliques), des poly(méth)acrylamides, des poly(acides vinylsulfoniques), des sulfonates de mélamineformaldéhyde, des sulfonates de naphtalèneformaldéhyde, des copolymères d'acide maléique et de styrène et des copolymères d'acide maléique et de vinyléther, des dextrines.

5. Procédé selon la revendication 4, caractérisé en ce qu'on polymérise en présence de poly(acétate de vinyle) partiellement saponifié présentant un degré d'hydrolyse de 80 à 95% en mole et une viscosité de Höppler de 1 à 30 mPa.s.

6. Procédé selon les revendications 1 à 5, caractérisé en ce qu'on copolymérise encore 0,05 à 10% en poids, par rapport au poids total du mélange de monomères, des monomères auxiliaires du groupe comprenant des acides monocarboxyliques et dicarboxyliques éthyléniquement insaturés, des amides et des nitriles d'acides carboxyliques éthyléniquement insaturés, des monoesters et des diesters de l'acide fumarique et de l'acide maléique, des acides sulfoniques éthyléniquement insaturés ou selon le cas leurs sels, des comonomères éthyléniquement polyinsaturés à préréticulation, des comonomères à post-réticulation, des comonomères à fonctionnalité époxyde, des comonomères à fonctionnalité silicium, des comonomères comprenant des groupements hydroxy ou CO.

7. Procédé selon les revendications 1 à 6, caractérisé en ce que le séchage de la dispersion de polymère est réalisé au moyen de séchage par pulvérisation, le cas échéant après addition d'autres colloïdes de protection.
